# EUROPEAN PATENT APPLICATION

(11) **EP 0 849 922 A2**
(43) Date of publication of application: **24.06.1998**
(21) Application number: 97309711.6
(22) Date of filing: 02.12.1997
(51) Int. Cl.: H04M 1/72, H04M 9/02

(54) **Telephone communication system**

(30) Priority: 16.12.1996 US 767044
(71) Applicant: NCR International, Inc., Dayton, Ohio 45479 (US)
(72) Inventor: Peters, Daniel V., Lisle, IL 60532 (US); Harms, David C., West Chicago, IL 60185 (US); Owen, Julie M., Broomfield, CO 80020 (US)
(74) Representative: Irish, Vivien Elizabeth

(57) **Abstract**

The present invention relates to a communications adapter to connect a transmitting and receiving apparatus, such as a telephone handset, to a ccmmunication line for communication in a first mode of communication and to a communication channel for interactive communication in a second mode of communication. The second mode of communication is non interfering with the first. The first mode of communication may be a normal regular telephone communication and the second mode may be an interactive intercom mode. The invention is applicable to a telephone system for use in a home or small office environment.

In the specific example of the invention, the adapter includes a switch relay operable to switch a telephone handset either to the telephone line or to a communication channel circuit linking to the intercom communication channel. A controller in the adapter can respond to a control signal received over the intercom communication channel to set the communication channel circuit to route audio signals to an audio generator. The audio generator will receive audio signals from the intercom communication channel so that communication may be made over the intercom channel before the telephone handset has been switched to the intercom mode of communication.

## Description

The present invention generally relates to a telephone communication system, and in particular, to an in-home (or a small office) telephone communication system utilizing the capabilities in existing telephone equipment and existing phone wiring with the addition of a control computer.

With increasing performance needs and expectations on home telephone system, more and more consumers are demanding that the home telephone system have more intelligence and processing capabilities at an affordable price. Thus, applicants have realized there is a large market potential to use modern PC's processing power of modern embedded controllers to provide home telephone system, referred to as PC Interactive Phone (PCIP) system with advanced home telephony features, including:
(1) caller ID announcement based on caller ID record,
(2) voice activated auto-dial,
(3) PC resident message center access from any HICOM equipped phone,
(4) routing of incoming calls to specific phones in the home,
(5) in-house intercom with no additional wiring of the home,
(6) screening of incoming messages from any HICOM equipped phone,
(7) home convenience package including list maker and scheduler, and
(8) speech recognition by using the PCIP system.

The present application specifically relates to the Home Intercom, referred to as HICOM feature which can be an important aspect of the PCIP system, but which is presented here as a standalone product. As a standalone product, HICOM does not require the PC and it's associated capabilities. As an integrated element of the PCIP system, which includes the PC, HICOM has the opportunity for enhanced features, especially as enabled by Speech Recognition.

Applicants have also realized that the feasibility to achieve such market potential greatly relies on an effective design of an enhanced intercom system:
(1) that has a low cost,
(2) that is flexible to form a specific telephone system for a household,
(3) that is adaptable to existing telecommunication technology,
(4) that is adaptable to consumer's existing telephone equipment and house wiring,
(5) that is simple to install, and
(6) that does not interfere with regular operation of existing home telephone system.

Applicants have further realized that the feasibility to achieve such market potential greatly relies on intelligent adapter boxes, and non-interfering communication channels that allow:
1. Intra-home communications between two members of the household using existing telephone facilities and existing phone wires and with the addition of HICOM adapter boxes connected in series with the user's existing phones.
2. Audible broadcast from the first party to speakers at all other HICOM equipped phone locations, typically for the purposes of calling the second party to the phone.
3. HICOM can be used as part of a PC Interactive Phone system that will allow additional features and flexibility by virtue of interaction with Speech Recognition software running on the user's home PC.

Therefore, there is a need to provide an intercom system with easy installation, simple operation, flexibility and low cost.

There is another need to provide an intercom system with adaptability to consumers' existing home telephone equipment and wiring.

There is another need to provide intercom system having intercom capability without interfering with regular operation of existing telephone system.

There is still another need to provide independent and simultaneous intercom and telephone calls in a home environment (or a small office environment).

The present invention provides the method and apparatus to meet these needs.

According to the invention a communication adapter to connect a transmitting and receiving apparatus to a communication line to transmit and receive communication signals over the communication line in a first, regular mode of communication, and to connect the transmitting and receiving apparatus to transmit and receive communication signals in a second, interactive mode of communication over a communication channel which does not interfere with the first mode of communication, the adapter comprising;
a communication channel circuit for communication with the said communication channel,
switch means to connect the transmitting and receiving apparatus to the communication line for the first mode of communication or to the communication channel circuit for the second mode of communication,
a controller to determine the mode of communication for the transmitting and receiving apparatus,
and an audio generator connected to the communication channel circuit,
the communication channel circuit being settable by the controller to route a communication from the communication channel to the audio generator before the transmitting and receiving apparatus is switched to the second mode of communication.

Also according to the invention a communication system including a plurality of communication adapters each as claimed in any one of the preceding claims, the adapters being connected in common to the communication line and to the said communication channel.

Further according to the invention a method of communication employing an adapter according to the invention, the method comprising the steps of;
receiving a control signal through the communication channel,
applying the received control signal to the controller,
setting the communication channel by means of the controller to route a communication from the communication channel to the audio generator,
generating an audio signal by means of the audio generator in response to the communication routed thereto,
and operating the switch means to switch the transmitting and receiving apparatus to the second mode of communication.

The invention will now be described by way of example with reference to the attached drawings, in which:
Figure 1 is a block diagram of a Home Intercom (HICOM) system, in accordance with the present invention;
Figure 2 shows house wiring of a telephone line and installation scheme for the Home Intercom (HICOM) system shown in figure 1, in accordance with the present invention;
Figure 3 (including 3A and 3B) shows the HICOM system of figure 1 in greater detail, in accordance with the present invention;
Figure 4 shows the user panel of figure 3 in greater detail;
Figure 5 shows the programs stored in on-chip, read-only memory storage on the Lon Works Controller device; and
Figure 6 shows a flowchart illustrating the steps in the operation of the HICOM equipment, in accordance with the present invention.

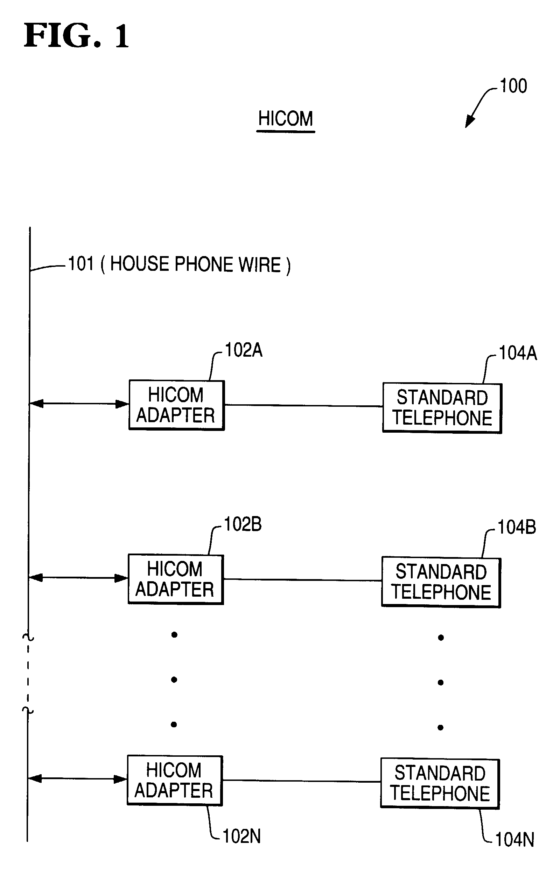

Referring to figure 1, there is shown a block diagram of a Home Intercom (HICOM) system, in accordance with the present invention.

The Home Intercom system includes a house telephone line 101, a plurality of telephone sets (identified as 104A, 104B, ..., 104N), and a plurality of HICOM adapters (identified as 102A, 102B, ..., 102N). Each of the telephone sets is coupled to its respective HICOM adapter. These telephone sets can be standard ones without any advanced features.

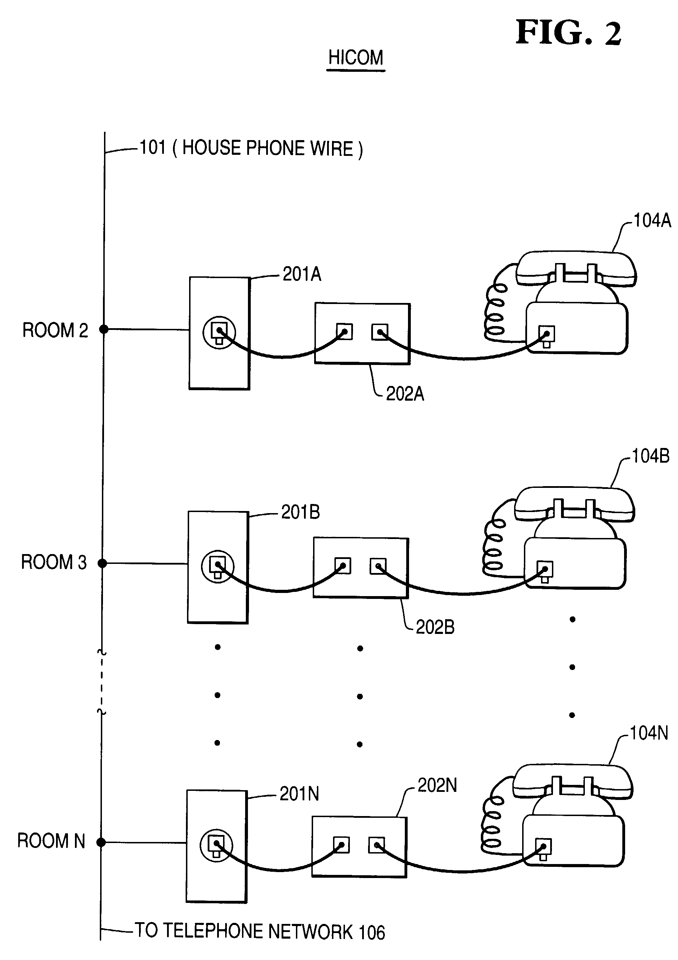

Referring to figure 2, there is shown house wiring of telephone line 101 and installation scheme for the Home Intercom (HICOM) system shown in figure 1, in accordance with the present invention. Telephone line 101 is wired into rooms 1-N, where telephone jacks 203, 201A, 201B, ..., 201N are installed respectively.

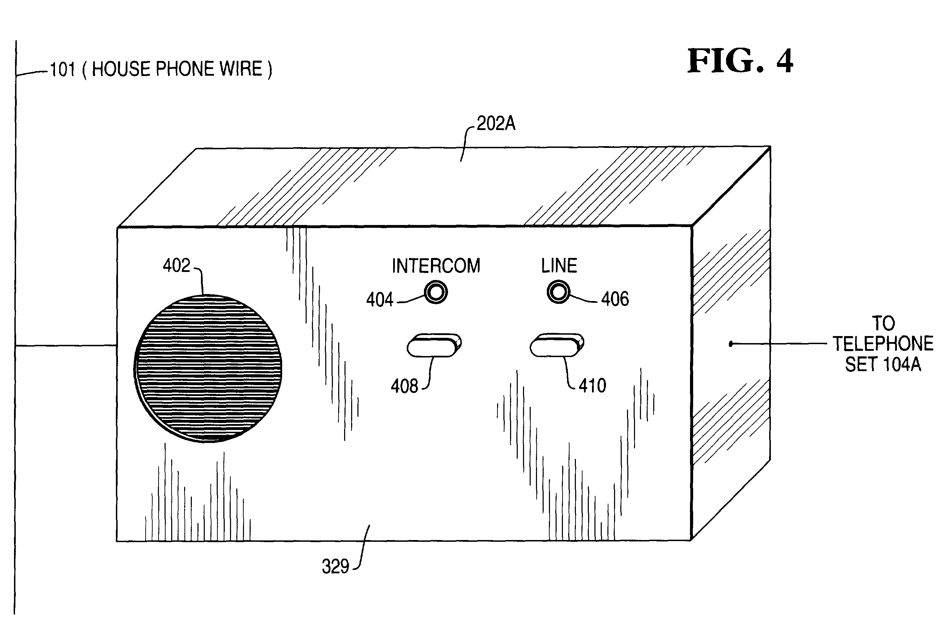

A plurality of HICOM adapter boxes (202A, 202B, ..., 202N) are coupled to telephone jacks 201A, 201B, ..., 201N, respectively. The telephone sets (104A, 104B, ..., 104N) are coupled to adapter boxes 202A, 202B, ..., 202N, respectively. Installed within adapter boxes 202A, 202B, ..., 202N are HICOM adapter circuits 102A, 102B, ..., 102N, respectively. Each of the adapter boxes has a user panel which is depicted in figure 4 in greater detail. Figure 2 shows how simply these elements are interconnected.

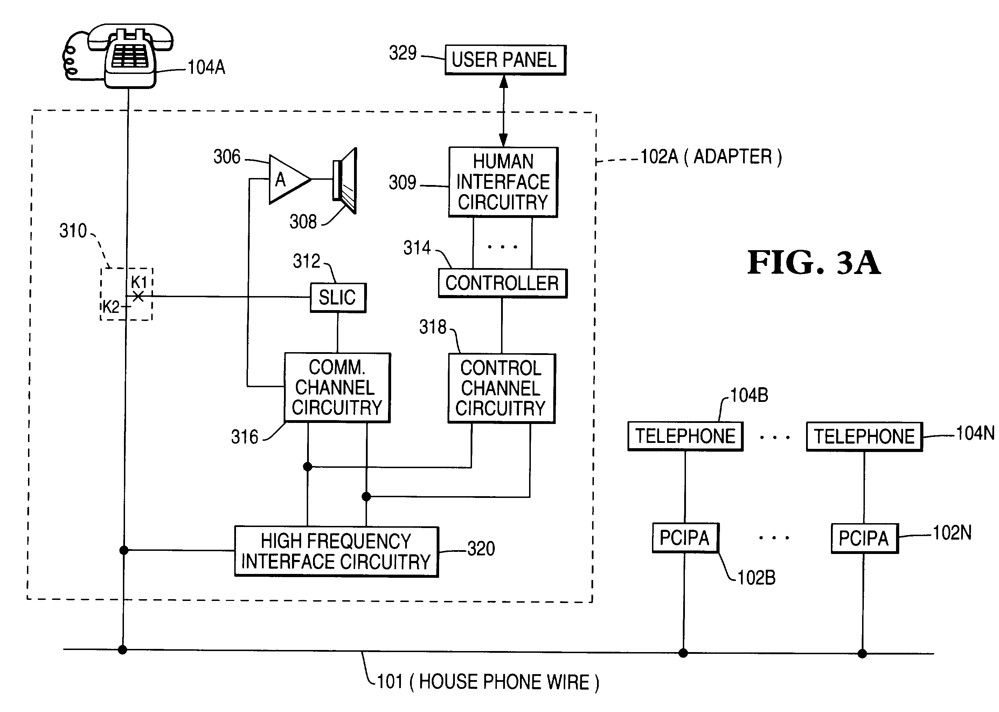

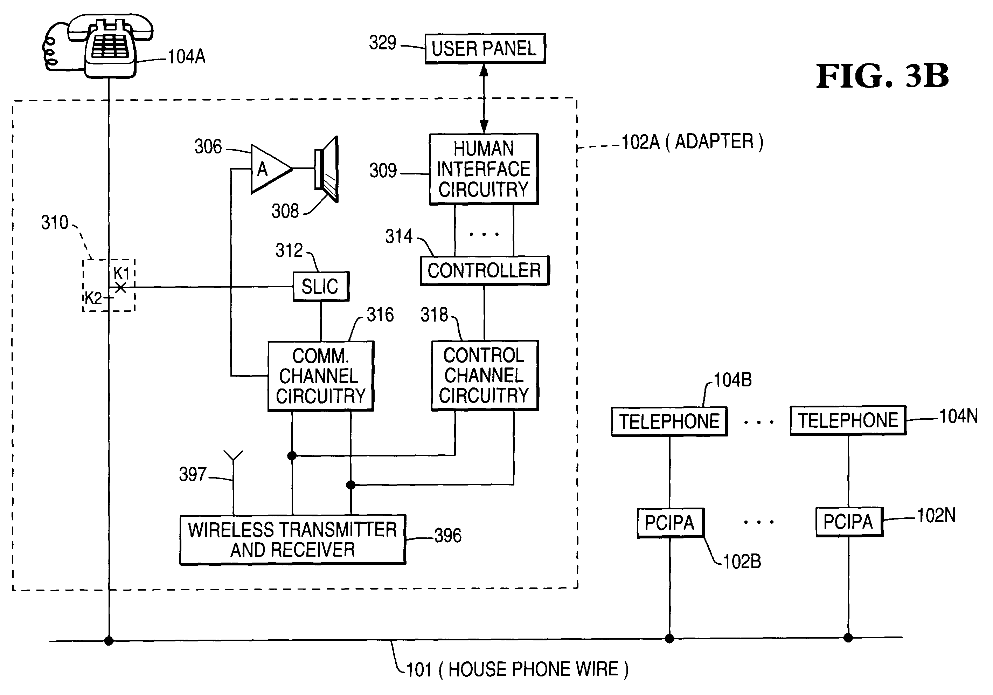

Referring to figure 3 (consisting of figures 3A and 3B), there is shown an embodiment of the Home Intercom (HICOM) system of figure 1 in greater detail, in accordance with the present invention.

Depicted in figure 3A as a representative of the pluralities of HICOM adapters (102A, 102B, ..., 102N), HICOM adapter 102A includes an amplifier 306, a speaker 308, a human interface circuitry 309, a relay 310, a subscriber loop interface (SLIC) 312, a controller 314, a communication channel circuitry 316, a control channel circuitry 318, and a high frequency interface circuitry 320. Coupled to human interface circuitry 309 is a user panel 329.

Speaker 308, coupled to communication channel circuitry 316 via amplifier 106, is able to project audio to HICOM adapter locations in the home as needed by the HICOM system. The speaker is used for intercom broadcast announcement capability (and a variety of PCIP capabilities which will not be discussed further here).

SLIC 312, coupled between communications channel circuitry 316 and telephone 104A via K1 switch located within relay 310, is able to power telephone set 104A, to detect off-hook condition for telephone set 104A, to adjust the proper bias and amplitude to send audio signal to and receive audio signal from telephone set 104A, to adjust the proper bias and amplitude to send audio signal to and receive audio signal from the communications channel circuitry 316, and to convert a 4-wire-send-and-receive signaling arrangement on the communications channel side to a 2-wire-send-and-receive signaling arrangement that is appropriate to a telephone set. The off-hook detect capability is used by the HICOM system to detect the off-hook state of the telephone handset. Modern SLIC circuits are highly integrated devices that can be purchased from a number of suppliers.

Relay 310 is able to connect telephone 104A to the telephone line directly for communication in a first regular mode of communication, or via adapter 102A for communication in a second, interactive mode of communication as will be explained.

Human interface circuitry 309, coupled to controller 314, is able to generate currents to light the LEDs on user panel 329 in response to control signals from controller 314, and to generate service request signals to controller 314 in response to activations of the function buttons on user panel 329.

In adapter 102A, as an embodiment, communication channel circuitry 316, coupled to SLIC 312, can include two high frequency communication channels: a high frequency transmitter and a high frequency receiver. The high frequency transmitter combines low frequency audio from SLIC 312 with a high frequency carrier that can be coupled onto the home telephone wires in a non-interfering manner using the high frequency interface circuitry 320. The high frequency receiver recovers low frequency audio from a high frequency carrier on the house telephone wires and sends it either to SLIC 312 or to speaker 306 and amplifier 308, depending on control signals communicated through the controller 314. The two high frequency communication channels are mainly used as a full duplex audio (e.g., simultaneous audio transmission and reception) channel to another adapter.

Control channel circuitry 318 can simultaneously encode and decode binary sequences between a low frequency and a high frequency carrier. The low frequency side of this circuit is connected to the controller 314 which has a communication port capable of transmitting and receiving Manchester encoded digital information. The high frequency side of control channel circuitry 318 can be coupled onto the house telephone wires in a non-interfering manner using high frequency interface circuitry 320. The encode side of control channel circuit 318 converts a binary "1" and "0" sequence to a "carrier on" and "carrier off" sequence. The decode side of control channel 318 circuit converts a "carrier on" and "carrier off" sequence to a binary "1" and "0" sequence.

High frequency interface circuitry 320, which connects communication channel circuitry 316 and control channel circuitry 318 to the telephone line, is able to couple high frequency carrier from circuitries 316 and 318 to telephone line 101, without interfering the normal audio band signal transmission on the telephone line. High frequency interface circuitry 320 can also receive high frequency signals from the telephone line.

Controller 314 is specialized for implementation of distributed sense and control networks. It includes a communication port, a configurable input/output port, and hardware and firmware that allow execution of simple programs for sense and control and communications protocols. The input/output port provides access to human interface circuitry 309 and it controls various communications path options within the HICOM adapter circuit. For example, the input/output port is able to control the states of relay 310 (energized or unenergized), to generate signals to light the LEDs on user panel 329, to detect a button activation on user panel 329, to monitor the off-hook detect status, and to switch the communication channel receiver output between speaker 106 and SLIC 112. The communication port that is integrated into controller 314 allows it to send and receive control commands to and from other HICOM adapters using data packets across the control channel. The Manchester encode and decode circuits that generate and sense the "1" and "0" bits are also integrated into the controller. Controller 314 also has a collision detect and back-off algorithm that allows multi-node access to the carrier. The specific device that currently suits this application is a Lon Works Neuron chip, MC143120 available from Motorola and Toshiba.

It should be noted that, in the embodiment shown in figure 3A, three out of voice band frequencies are used to implement these three channels in the HICOM adapters (102A, 102B, ..., 102N), so that the signaling of these three channels does not interface with the signaling between a telephone set and a telephone network, even when these two signalings are on the telephone line simultaneously.

Preferably, in the embodiment shown in figure 3A, 312.5 KHz and 357.1 KHz are used for two communication channels and 416.7 KHz for one control channel. These three specific frequencies are chosen because they are between 540 KHz (the bottom of the AM broadcast band) and 270 KHz (the lowest frequency that can be used for compliance to part 68 Federal Communication Commission). These three frequencies are also multiples of 10 MHz, which makes them easy to generate without RC or L tunables.

In the embodiment as shown in figure 3A, a communication channel between adapter 102A and another adapter 102N is formed by: HICOM adapter 102A communication channel circuitry 316, HICOM adapter 102A high frequency interface circuitry 320, house phone wire 101, HICOM adapter 102N high frequency interface circuitry 320, HICOM adapter 102N communication channel circuitry 316. A control channel between adapter 102A and another adapter 102N is formed by: HICOM adapter 102A control channel circuitry 318, HICOM adapter 102A high frequency interface circuitry 320, house phone wire 101, HICOM adapter 102N high frequency interface circuitry 320, HICOM adapter 102N control channel circuitry 318.

Unlike the conventional telephone communication system, the present invention uses two communication channels to achieve full duplex audio. In the conventional telephone communication, one set of wires achieves full duplex audio by using a hybrid transformer that separates transmitting from receiving in a telephone set. However, the method used in the conventional telephone communication is not feasible when audio is modulated in an out of voice band carrier, because, if both ends of a communication channel used the same carrier, the result would be scrambled unrecoverable carrier.

In addition, unlike the conventional telephone communication system where a telephone office is usually either in audio transmission mode or in controlling mode (such as on-hook or off-hook signaling), the features provided by the adapters sometimes need to process audio transmission and control signals at the same time when multiple telephone sets connected to the telephone line are in use at the same time. Thus, in adapter 102A-N, the communication channels are separated from the control channel.

In the embodiment shown in figure 3A, the existing house telephone wiring is used as transmission medium for the three high frequency channels between the adapters 102A-N. However, other transmission media can be used to implement these three channels, such as wireless or power line carrier.

Referring to figure 3B, there is shown another embodiment of the Home Intercom (HICOM) system of figure 1 in greater detail, in accordance with the present invention.

Figure 3B has a similar structure as figure 3A, except that in figure 3B high frequency interface circuitry 320 of figure 3A is replaced by wireless communication interface circuitry 396, which includes an antenna 397. Thus, in figure 3B, only HICOM adapter wireless communication interface circuitry 396 will be further described.

Wireless communication interface circuitry 396 (or 398) is able to implement a duplex communication link using two frequencies between any two HICOM adapters, and is able to implement a multi-point control channel on a third frequency. The communication link technology is common in the industry, as in cordless phone technology. However, specific control must be exerted to prevent more than one transmitter at a time on one frequency. The multi-point control link is implemented as a single frequency that is modulated "on" or "off" for Manchester encoded signaling by any of the HICOM adapter circuits. Multi-point networking is possible because each HICOM adapter circuit implements a collision detect and back-off algorithm as in the wired approach.

In the embodiment as shown in figure 3B, the communication between two adapters is through wireless carrier, instead of house telephone line 101. In figure 3B, a communication channel between two adapters is formed by: HICOM adapter 102A communication channel circuitry 316, HICOM adapter 102A wireless communication interface circuitry 396, HICOM adapter 102N wireless communication interface circuitry 396, HICOM adapter 102N communication channel circuitry 316. A control channel between adapter 102A and HICOM adapter 102N is formed by: HICOM adapter 102A control channel circuitry 318, HICOM adapter 102A wireless communication interface circuitry 396, HICOM adapter 102N wireless communication interface circuitry 396, HICOM adapter 102N control channel circuitry 318.

Referring to figure 4, there is shown user panel 329, which is mounted on the front of adapter box 202A, in greater detail in accordance with the present invention.

As shown in figure 4, user panel 329 includes a speaker opening 402, two LEDs (404, 406), and two buttons (408, 410). LED 404, labeled INTERCOM, indicates whether the intercom feature is in use, as would be the typical case after pressing button 408. LED 406, labeled LINE, indicates whether adapter 102A is directly connected to telephone line 101, as would be the typical case after pressing button 410.

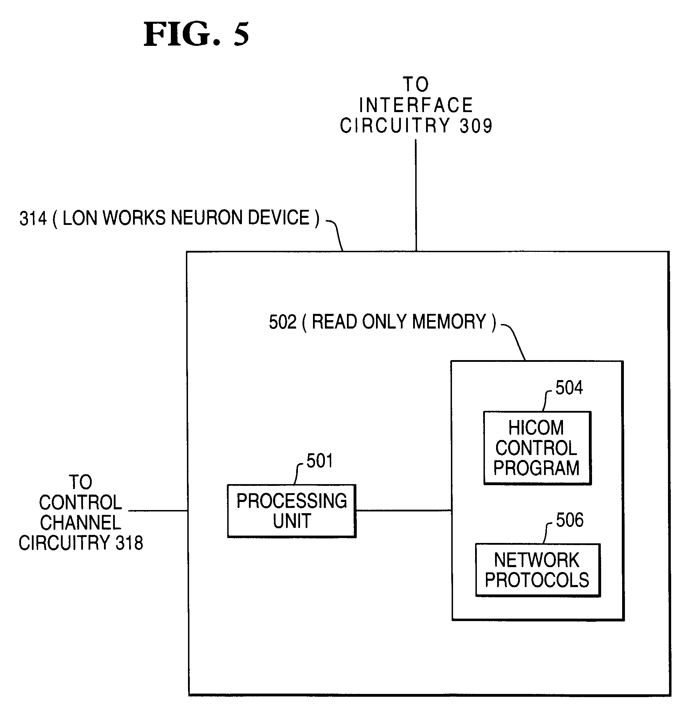

In the idle state, LED 406 is ON, indicating that relay 310 connects telephone set 104A to the telephone line. This is preferred because the telephone is more frequently used than intercom. Furthermore, the telephone set should be typically connected to the telephone line so that it can receive ringing currents associated with incoming telephone calls. By pressing button 408, the user can over-ride the default condition, which causes relay 310 to connect telephone set 104A to SLIC 312, which allows access to the communication channels. Relay 310 is controlled by HICOM control program 602 (see figure 5) and the firmware in controller 314, which are responsive to button pushes, off-hook conditions, system state, and resource availability, such as availability of the audio communication channels. In the event of a power failure at the HICOM adapter, relay 310 will directly connect telephone set 104A to telephone line 101 and the intercom function will not be available.

Referring to figure 5, there is shown controller 314 in greater detail, in accordance with the present invention.

As shown in figure 5, controller 314 includes a processing unit 501 and a read only memory 502 containing a HICOM control program 504 and a network protocols 506. Lon Works Neuron device manufactured by Motorola or Toshiba can be used as the controller. Further detail information can be found in Lon Works Neuron device databook.

HICOM control program 504 is able to maintain state information for the system and orchestrate responses to various stimulus. Stimulus's include button pushes, off-hooks, and system state changes. Responses include establishing communication connections, lighting LEDs, etc. Specific examples are provided in the discussion of the flowcharts below. HICOM network protocol program is supplied by Lon Works Neuron device and includes various capabilities that facilitate multi-point networked communications.

Network protocol 506 is able to receive and transmit packets of data, which entails to: separate routing (identification or addressing) information from the data information, manage error checking and flow control, execute a low level Manchester encoding and decoding of individual bits, and execute collision detect and back-off algorithm as required for a serial network architecture. The network protocol acts on the interface to the control channel circuit.

Processing unit 501 is able to is able to execute the HICOM control program and the network protocol in a sequential execution. The processing unit 501 also acts on stimulus from human interface circuitry 309.

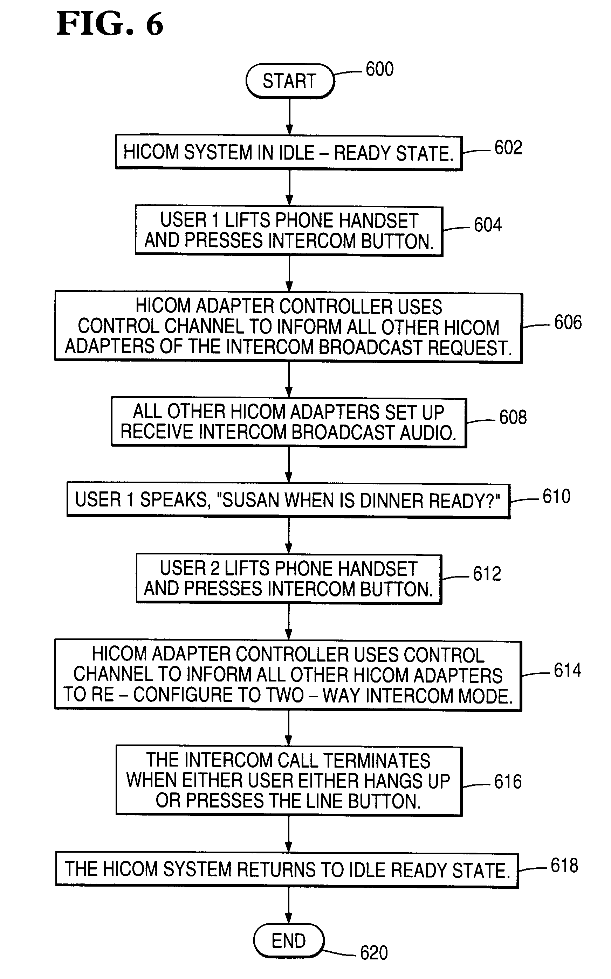

Referring to figure 6, there is shown a flowchart illustrating the human interaction and the underlying system operation of the HICOM Intercom system, in accordance with one embodiment of the present invention. Other variations of this invention are possible to the people skilled in the art.

In describing the operation shown in figure 6, it is assumed that a user initiates the intercom operation at telephone set 104A equipped with adapter 102A. The other telephone sets (104B, ..., 104N) can also be used to initiate the intercom operation.

In step 602, the HICOM system is in Idle-Ready state. Line LED 406 is on, and Intercom LED 404 is off. HICOM control program 504, which is resident in each of the controllers in the HICOM adapters (102A, 102B, ..., 102N), is also in Idle-Ready state. Relay 310 is switched to telephone line 101, so that telephone set 104A will ring for normal phone calls.

In step 604, to initiate an intercom call, a userl lifts the handset of telephone 104A and activates intercom button 408. In response to the activation of intercom button 408, human interface circuitry 309 generates an intercom broadcast request and passes it to controller 314. By looking at panel 329 on adapter box 202A, the userl can verify that Intercom LED 404 is ON, so that the userl knows that he/she can communicate via a broadcast mode of the intercom feature. (On the other hand, if the userl did not want to use the HICOM feature, he/she would lift the handset, hear a normal dialtone, and dial the number). At the HICOM adapter circuit level, when the handset is lifted, SLIC 312 detects Off-hook state and signals this state to HICOM adapter controller 314. The controller detects the button press via interface circuitry 309. The controller causes Line LED 406 to turn off and Intercom LED 404 to turn on. HICOM control program 504 executed by processing unit 501 performs the steps to initiate intercom broadcast.

In step 606, controller 314 forms an information data packet corresponding to this newly generated "intercom broadcast request" condition, informing all other HICOM adapters (102B, ..., 102N) that HICOM adapter 102A will be transmitting audio from the userl speaking into the handset onto one of the two high frequency communication channels and that all of the other HICOM adapter boxes must receive on the same communication channel and route the audio to their own speaker. With the embodiment shown in figure 3A, this packet is sent from adapter controller 314 in HICOM adapter 102A, through 102A adapter control channel circuitry 318, 102A adapter high frequency interface circuitry 320, house phone wire 101, to each of 102B-N adapters' high frequency interface circuitry 320, each of 102B-N adapters' control channel circuitry 318, and to each of 102B-N adapters' controller 314. With the embodiment shown in figure 3B, this packet is sent from HICOM 102A adapter controller 314, through 102A adapter control channel circuitry 318, 102A adapter wireless transmitter and receiver 396, to each of HICOM 102B-N adapters' wireless transmitter and receiver 396, to each of 102B-N adapters' control channel circuitry 318, and to each of 102B-N adapters' controller 314. In this way, the HICOM controller in adapter 102A alerts HICOM control programs 602s on the other adapters (102B, ..., 102N) of the off-hook change of state.

In step 608, after receiving the "intercom broadcast request" information packet from HICOM adapter 102A, all HICOM adapters (102B, ..., 102N) set their communication channel circuits to receive audio on the assigned frequency and route the audio to their speaker.

In step 610, after picking up the handset of telephone 104A, the userl speaks into the telephone handset to request that the intended person to come to the nearest phone, for example: "Susan when is dinner?" This can be heard by anyone near one of the HICOM adapters (102B, ..., 102N) in the system. (This example assumes that the prior setup activity happens quickly enough that the userl does not need to be prompted). With the embodiment shown in figure 3A, this audio is sent through 102A adapter SLIC 312, 102A adapter communication channel circuitry 316, 102A adapter high frequency circuitry 320, house phone wire 101, to all 102B-N adapters' high frequency interface circuitries 320, 102B-N adapters' communication channel circuitries 316, and to 102B-N adapters' speakers 308. With the embodiment shown in figure 3B, this audio is sent through 102A adapter SLIC 312, 102A adapter communication channel circuitry 316, 102A adapter wireless transmitter and receiver 396, to all other 102B-N adapters' wireless transmitter and receivers 396, 102B-N adapters' communication channel circuitries 316, and to 102B-N adapters' speakers 308.

Specifically, at HICOM adapter circuit level, SLIC 312 on HICOM adapter 102A converts 2-wire audio from telephone 104A of "Susan when is dinner?" to appropriately biased audio to send to communication channel circuitry 316. Communication channel circuitry 316 converts analog "Susan when is dinner?" to a high frequency modulated signal that is transmitted throughout the home on the communication channel which uses house phone wire 101 or wireless carrier.

At step 610, the communication channel circuitry (316) on HICOM adapter 102A is not interactively connected to the communication circuitries on the other HICOM adapters (102B, ..., 102N), meaning that there is no bi-directional signal flow between HICOM adapter 102A and any one of the other HICOM adapters (102B, ..., or 102N). Consequently, telephone set 104A is not interactively connected to the other telephone sets (104B, ..., 104N), meaning that there is no bi-directional signal flow between telephone set 104A and any one of the other telephone sets (104B, ..., or 104N).

In step 612, a user2 decides to answer the intercom call. The user2 goes to nearest phone, in this case, 104B, and picks up the handset and activates the Intercom button on HICOM adapter box 202B. In response to the activation of the Intercom button, adapter 102B human interface circuitry 309 signals to controller 314 that this button has been activated. The controller, in response to the activation signals, causes the Intercom LED to turn ON and the Line LED to turn off. The user2 looks at panel 329 on adapter box 202B to verify that the Intercom LED is ON, and thus determines that he/she can communicate via the two way mode of the intercom feature. At the circuit level of HICOM adapter 102B, when the handset is lifted, SLIC 312 detects Off-hook state and signals this state to controller 314. Controller 314 on HICOM adapter 102B detects the button activation via interface circuitry 309 and the off-hook change of state. HICOM control program 504 executed by processing unit 501 performs the steps to initiate two-way intercom between HICOM adapters 102A and 102B.

In step 614, controller 314 on HICOM adapter 102B detects the off-hook and the button activation and forms an information data packet corresponding to the newly generated "two way intercom request" condition. This packet is transmitted over the control channel to all other HICOM adapters, informing all other HICOM adapters that HICOM adapter 102A and HICOM adapter 102B will be engaged in two way intercom and that all of the other HICOM adapter boxes must not use the Intercom feature on the communication channels. HICOM adapter 102A and HICOM adapter 102B act together to form a single bi-directional communication, which will not interfere the regular communication on telephone line 101. The call proceeds with one user transmitting on the lower frequency and one user transmitting on the higher frequency. The user2 may respond, "Get your own dinner", and so forth. Others cannot participate in the intercom call in progress. If a third user picks up another telephone and presses the Intercom, the Intercom LED does not light (or blinks) and the phone remains connected to the Line. The blinking state of the Intercom LED on all the HICOM adapter boxes signifies that an Intercom call is in progress. Control messages are transmitted in a manner consistent with that described in step 606. Audio from the telephone set is biased at the SLIC, modulated, routed, and demodulated in a manner consistent with that described in step 610.

At step 614, the communication channel between adapters 102A and 102B uses two carrier frequencies to allow simultaneous voice transmission in both directions between adapters 102A and 102B, meaning that there is a bi-directional signal flow between adapters 102A and 102B. Consequently, telephone set 104A is interactively connected to telephone set 104B, meaning that there is a bi-directional signal flow between telephone set 104A telephone set 104B.

In step 616, the intercom call terminates when either of the users hangs up or presses the Line button on the adapter box (202A or 202B). This is detected by SLIC 312 or controller 314 via interface circuitry 309 on the HICOM adapter (102A or 102B). This change of state is communicated to all HICOM adapters via an information packet transmitted over the control channel.

In step 618, the HICOM system returns to Idle-Ready state.

At any time during the intercom call, normal incoming and outgoing telephone calls can proceed to and from any HICOM adapter equipped phones that have their Line LED ON. Simultaneous phone calls and intercom calls will not interfere with each other.

It should be noted that even though the embodiments of the present invention are described in a home environment, the principle of the present invention can be readily used in other environments, such as small office environment, for example.

## Claims

1. A communication adapter (102A, 102B, 102N) to connect a transmitting and receiving apparatus (104A, 104B, 104N) to a communication line (101) to transmit and receive communication signals over the communication line (101) in a first, regular mode of communication, and to connect the transmitting and receiving apparatus to transmit and receive communication signals in a second, interactive mode of communication over a communication channel which does not interfere with the first mode of communication, the adapter comprising;
a communication channel circuit (316) for communication with the said communication channel,
switch means (310) to connect the transmitting and receiving apparatus (104A, 104B, 104N) to the communication line (101) for the first mode of communication or to the communication channel circuit (316) for the second mode of communication,
a controller (314) to determine the mode of communication for the transmitting and receiving apparatus,
and an audio generator (306,308) connected to the communication channel circuit (316),
the communication channel circuit (316) being settable by the controller (314) to route a communication from the communication channel to the audio generator (306,308) before the transmitting and receiving apparatus is switched to the second mode of communication.

2. A communication adapter according to claim 1, in which the communication line to which the adapter connects the transmitting and receiving apparatus (104A, 104B, 104N) for communication in the first mode of communication is a telephone line (101).

3. A communication adapter according to claim 2, in which the communication channel to which the adapter connects the transmitting and receiving apparatus (104A, 104B, 104N) for communication in the second mode of communication includes the telephone line (101) for communication in the first mode of communication.

4. A communications adapter according to claim 3, in which the communication channel circuit (316) is connected to an interface circuit (320) providing an interface to the communication channel at frequencies outside the telephone audio band.

5. A communications adapter according to claim 1 or 2, in which the communication channel to which the adapter connects the transmitting and receiving apparatus (104A, 104B, 104N) for communication in the second mode of communication comprises a wireless communication channel (396, 397).

6. A communications adapter according to any one of the preceding claims in which the switching means (310) comprises a switch relay.

7. A communications adapter according to any one of the preceding claims in which the transmitting and receiving apparatus (104A, 104B, 104N) comprises a telephone handset.

8. A communications adapter according to any one of the preceding claims in which the controller (314) is connected through a human interface circuit (309) to a user panel (329) adapted to supply an input to the controller (314) to operate the switch means (310) to connect the transmitting and receiving apparatus (104A, 104B, 104N) to the communication channel circuit (316).

9. A communication system including a plurality of communication adapters each as claimed in any one of the preceding claims, the adapters being connected in common to the communication line (101) and to the said communication channel.

10. A method of communication employing an adapter as claimed in any one of claims 1 to 8, the method comprising the steps of;
receiving a control signal through the communication channel,
applying the received control signal to the controller (314),
setting the communication channel (316) by means of the controller (314) to route a communication from the communication channel to the audio generator (306, 308),
generating an audio signal by means of the audio generator (306, 308) in response to the communication routed thereto,
and operating the switch means (310) to switch the transmitting and receiving apparatus (104A, 104B, 104N) to the second mode of communication.

11. A method of communication employing a communication system which is as claimed in claim 9, the method comprising the steps of;
generating a control signal at a first of the adapters,
communicating the control signal by way of the communication channel to a second of the adapters,
applying the control signal to the controller (314) of the second of the adapters,
setting the communication channel circuit (316) of the second of the adapters to route a communication from the first of the adapters to the audio generator (306, 308) of the second of the adapters,
generating an audio signal by means of the audio generator (306, 308) of the second of the adapters in response to the communication from the first of the adapters,
and operating the switch means (310) of the second of the adapters to switch the transmitting and receiving apparatus of the second of the adapters to the second mode of communication.
